Europäisches Patentamt

European Patent Office

Office européen des brevets

(11) Publication number: **0 336 513**
**A1**

## (12) EUROPEAN PATENT APPLICATION

(21) Application number: **89200841.8**

(22) Date of filing: **03.04.89**

(51) Int. Cl.⁴: **A01D 80/00**

(30) Priority: **05.04.88 NL 8800844**

(43) Date of publication of application:
**11.10.89 Bulletin 89/41**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **Bom, Cornelis Johannes Gerardus**
**16 Laan van Nieuw Rozenburg**
**Rozenburg(NL)**
Inventor: **Krijnen, Cornelis Adrianus**
**Wilhelmus**
**113A Gors**
**Hoeven(NL)**

(74) Representative: **Mulder, Herman et al**
**Octrooibureau Van der Lely N.V. Weverskade**
**10 P.O. Box 26**
**NL-3155 ZG Maasland(NL)**

(54) An agricultural machine comprising a tine loss protection means.

(57) In order to prevent the loss of broken-off tine portions, an agricultural machine provided with tines (8, 9) comprises a protection element (14; 14A, 14B; 20A, 20B; 28) which is attached to a tine, is threaded through a plurality of windings (10, 11, 26) contiguous to the active tine portion, and is attached to a carrier member (1) associated with the tine. The protection element may be extended along the rear side of a tine so as to prevent the loss of short tine portions.

FIG.6

## AN AGRICULTURAL MACHINE COMPRISING A TINE LOSS PROTECTION MEANS

The invention concerns an agricultural machine comprising at least one cultivating member having a carrier member provided with tines whether or not arranged in groups, which tines, each together with a plurality of windings, are made from an integral piece of spring steel wire and are clamped against one side of the carrier member by means of a connection element arranged beside said windings, while a tine loss protection element connects the tine to the carrier member.

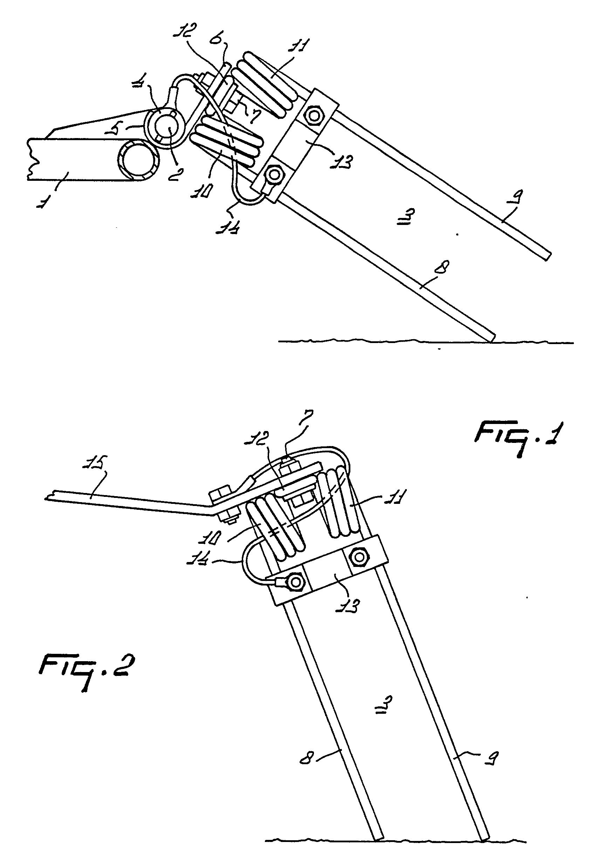

A machine of the above-defined type is disclosed in NL-A 6705524 (Figure 1). This prior art haymaking machine comprises tines which, together with associated pluralities of windings, are arranged at the bottom side of a carrier member, and each of which is attached to the carrier member at the side of the associated plurality of windings facing away from the tine by means of a bolt. By means of a connection member made of a resilient material, such as a synthetic resin material, the tine is connected directly to the carrier member so as to prevent, in case of rupture, the broken-off part of the tine from landing in the crop. Such a broken-off piece of spring steel wire might cause damage to further processing machines, such as balers or loaders.

It has been found in practice that tine fractures do not only occur in the region of the transition to the windings but also near the attachment to the carrier member. It also happens that the connecting bolt of the assembly of tine and windings gets loose or breaks, so that the entire tine or group of tines is flung away because in such a case the connection member will also break.

It is the object of the invention to so improve the protection against tine loss that the risk of losing tines is as low as possible.

According to the invention, the protection element is threaded through the plurality of windings associated with the tine. Since the protection element is attached to the tine, is surrounded by the windings and is attached to the carrier member, in each of the stated cases of fracture a protection element made of e.g. steel wire will be capable of not losing broken-off parts or an assembly as a whole.

When, in addition, it is desired to prevent that broken-off tine ends are lost, the protection element can be passed along the tine or near the free tine end and be clamped there without the effect of the tine being adversely affected.

For a better understanding of the invention and to show how the same may be carried into effect, reference will now be made, by way of example, to some embodiments thereof as shown in the accompanying drawings, in which:

Figure 1 is a horizontal view of part of a haymaking machine carrier member provided with a pivotable, outwardly directed group of tines, the protection element according to the invention being employed;

Figure 2 is a horizontal view of part of a haymaking machine carrier member spoke provided with a rigidly connected group of tines, a protection element being employed;

Figures 3 to 7 relate to further embodiments of protection elements employed with carrier members having pivotal groups of tines, shown in a horizontal view.

Figure 1 shows part of a haymaking machine comprising rake members, each of which rake members includes a carrier member 1 formed by a known per se circular rim which is drivable about an upwardly directed axis of rotation. At the periphery of the carrier member or rim 1 there are mounted at regular interspaces tangentially directed pivot pins 2, about which groups of tines 3 are capable of pivotal movement. Both Figure 1 and the subsequent drawings illustrate only one group of tines; the further tines or groups of tines may be of an identical structure.

A sleeve 4 is capable of pivotal movement about the pivot pin 2 shown in Figure 1. To the outer circumference of the sleeve 4 there is welded a curved portion 5 of a tine carrier 6 which, remote from the pivot pin 2, includes an aperture for accommodating a bolt 7 to connect the group of tines 3.

Each group of tines 3 comprises a lower tine 8 and an upper tine 9, the two of which merge into associated flexible windings 10 and 11, respectively. The windings 10 and 11 are interconnected by a connecting member 12 which is clamped against one side of the tine carrier 6 by means of the bolt 7. The tines 8, 9, the turns 10, 11 and the connecting member 12 are made integrally from a length of spring steel wire in a known per se manner.

The arrangement and connection of the group of tines 3 to the carrier member 1 is such that the tines 8 and 9 are located approximately one above the other and, during operation, are directed substantially outwardly and to some extent downwardly. This position is determined by the location of the centre of gravity of the assembly of the group of tines 3 and the tine carrier 6, which location is such that, seen in Figure 1, a line connecting the centre of gravity and the centre line of the pivot pin 2 is approximately perpendicular to the direction of the axis of rotation of the carrier member 1. During operation, the free end of the lower tine 8 comes into contact with the soil, with irregularities of the soil, with stones etc. and, of course, also with the crop to be picked-up, so that in general the lower tine is loaded to a greater extent than the upper tine 9 which is subjected substantially to the load of the crop to be displaced.

Consequently, the risk of fracturing of the lower tine 8 is significantly greater than that of the tine 9. In this connection, in Figure 1 there is shown a substantially plate-shaped connecting element 13 which is made of metal or a synthetic resin material and, near its ends, is folded back to produce approximately cylindrical apertures which are pushed over the tines 8 and 9 until the connecting element 13 arrives in a position near the windings 10, 11.

Should the lower tine 8 break in a place located between the end of the windings 10 and the connecting element 13, the broken portion of the tine 8 remains to be suspended from the upper tine 9 by means of the connecting element 13, so that the broken-off tine fragment cannot fall into the crop and, consequently, not into subsequent machines.

This prior art connecting element 13 has as a first disadvantage that it does not offer a solution when the lower tine 8 breaks between its free end and the connecting element 13. Secondly, the connecting element 13 cannot clamp to a sufficient extent around the tines 8 and 9, so that it shifts towards the free ends thereof, seriously disturbs there the pick-up of the crop or is even flung from the tines. This can only be prevented by providing the said cylindrical apertures near the two ends of the element 13 with a rather tight fit around the tines 8 and 9 (which to a significant extent prevents a rapid shift of all the groups of tines) and/or by very carefully tightening the clamping bolts of the folded-back ends of the element 13 (Figure 1), which requires quite a lot of time.

In order to obviate these disadvantages, in accordance with the inventive idea a protection element 14, which may be in the form of a cord or thin cable made of flexible steel wire, nylon cord etc., is attached to that end of the connecting element 13 which is located nearest to the most heavily loaded tine 8. Taken from its point of attachment to the lower end of the element 13, the cable is threaded through the windings 10, which are adjacent to and contiguous to the tine 8, and has its other end attached to the pivot pin 2 and hence to the carrier member 1. Of course, the latter end can also be attached to the rim 1 in a different location near the pivot pin 2. For the sake of clarity, the protection element 14 is shown in Figure 1 with wide curvatures; it is, however, recommendable to thread the element 14 from its point of attachment to the connecting element 13 to that to the carrier member 1 as tightly as possible through the windings 10, so as to prevent the connecting element 13 from being displaced towards the free ends of the tines. When the element 14, in mounted condition, is tightened and has one end attached to the pivot pin 2, it does not prevent pivotal movements of the group of tines therearound.

Thus, the tine 8 is prevented from being left behind in the crop when it breaks between the windings 10 and the point of attachment of the connecting element 13 or when the windings 10 themselves break off, e.g. near the connecting member 12 surrounding the bolt 7. It also occurs, although this risk is comparatively smaller, that the entire group of tines 3 gets loose from the tine carrier 6, because e.g. the nut screwed onto the bolt 7 gets loose or the bolt itself breaks. Also in this case the element 14 prevents the group of tines from getting lost.

Figure 2 shows a similar case wherein the carrier member of the rake member has spokes 15 which near their free ends carry rigidly connected, downwardly directed groups of tines. Such a group of tines is also denoted by the reference numeral 3 and the portions thereof are given the same reference numerals as in Figure 1. However, the tine 9 in the embodiment of Figure 2 is slightly longer than that of Figure 1, because the free ends of both tines 8, 9 must reach to as far as the soil or to the same distance thereabove. This also implies that, in the case of substantially downwardly directed tines of a group of tines, both tines of the group have approximately the same risk of breaking. In this case, one end of the flexible element 14 is also attached near one end of the connecting element 13 (near the tine 8, near the tine 9 or in any other position on the connecting element 13). Thereafter, the element 14 is threaded through both the windings 10 and the windings 11 and is attached to the spoke 15 by means of its other end. The latter connection can be effected by means of the bolt 7 or, alternatively, by means of a separate connecting bolt.

In this manner it is achieved that, when the tine 8 or the tine 9 breaks in a position located between the respective windings 10 and 11 and the connecting element 13, or when one of the windings 10 or 11 breaks and even when the entire group of tines gets loose, the defective portion remains suspended from the spoke 15.

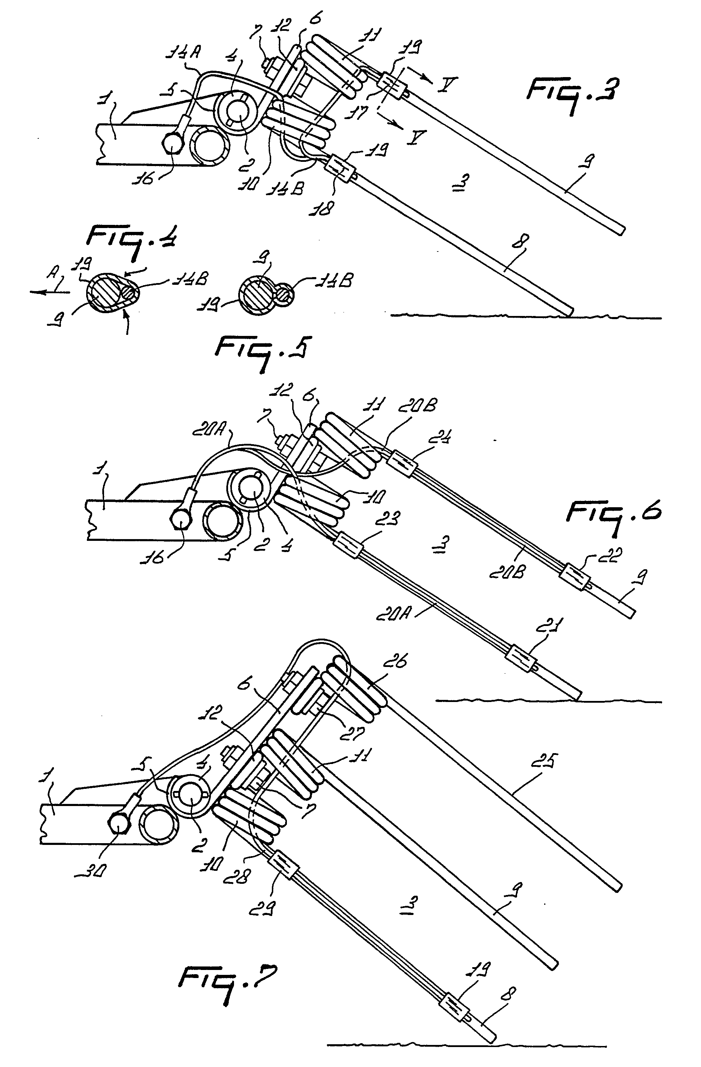

Analogously to Figure 1, Figure 3 again shows an embodiment of a haymaking machine having outwardly directed groups of tines 3, although in this embodiment the connecting element 13 is omitted. In this case, the flexible element 14 is of a dual construction and is denoted by the reference numerals 14A and 14B. From its point of attachment (to be defined in further detail hereinafter) to the tine 9, the protection element 14B is threaded through the two groups of windings 11 and 10, respectively, to its point of attachment to the tine 8. The flexible element 14A is threaded from (the same) point of attachment to the tine 8 through the windings 10 to a point of attachment 16 arranged on the carrier member 1.

The connection of the protection element 14B to the upper tine 9 is denoted by the reference numeral 17 and the connection of the two protection elements 14A and 14B to the lower tine 8 is denoted by the reference numeral 18. In this embodiment, the points of attachment 17 and 18 are located near the transition from the relevant tine to the relevant windings.

The constructional design of the point of attachment 17 will now be described in further detail with reference to Figures 4 and 5, which illustrate two stages in the provision of this connection. As is apparent from Figure 4, the cord or cable 14B is so placed next to and against the relevant tine 9 that their longitudinal directions are identical. Thereafter a sleeve 19 is pushed onto the tine 9 from its free end, which sleeve has an approximately elliptical cross-section which is dimensioned such that the sleeve 19 can be provided with a tight fit around the free end of the protection element 14B. Thereafter the jaws of a pair of pliers are positioned such on both sides of the sleeve 19 that they are in a position approximately in the region of the spaces between the tine 9, the element 14B and the sleeve 19 (see the position of the arrows in Figure 4). Thereafter the e.g. hydraulically or pneumatically driven pair of pliers is closed, thereby causing the sleeve 19 to be highly deformed in the region between the tine 9 and the element 14B, so that the relevant portions of the sleeve 19 are gripped as much as possible between the tine 9 and the element 14 (Figure 5). The pinching of the periphery of the sleeve 19 in the position between the tine 9 and the element 14B as indicated by the arrows in Figure 4 permits a maximum deformation of the sleeve 19. This deformation causes a hardening of the material of part of the sleeve, which hardening is such that a very strong clamping connection is produced between the tine 9 and the element 14B. So as to allow of a hardening of the material using cold deformation, the material of the sleeve 19 is chosen accordingly; this material may be a customary non-alloyed steel, such as St. 37 or stainless steel.

The application of the clamping connection by means of the sleeve 19 is performed such that the cord or cable 14B, taken in a direction relative to the direction of rotation or the direction of operative travel of the tine 9 (indicated in Figure 4 by the arrow A), is located behind the tine 9.

The connection of the tine 8 to the protection elements 14A and 14B is effected in a similar manner. In this case, the ends of the two elements 14 can be placed behind the tine 8 one above the other, or alternatively one behind the other, before the relevant sleeve 19 is pused thereonto. In this case, the sleeve 19 is of a somewhat larger size, because it has to surround two elements 14 in addition to the tine 8.

In the embodiment of Figure 3, the protection element 14B is threaded from its point of attachment 17 to the point of attachment 18 through the two windings 11 and 10, respectively. The element 14A is threaded from its point of attachment 18 through the lower windings 10 to its point of attachment 16 on the carrier member 1. The two flexible elements 14 are tightened as much as possible.

The connection by means of sleeves 19 has the advantage that the crop pick-up action by the tines is not interfered with at all. When the lower tine 8 would break between the point of attachment 18 and the adjacent windings 10, the broken tine 8 remains suspended from the tine 9 by means of the element 14B, whilst, when the entire group of tines would break off, the flexible element 14A prevents the loss thereof. When the group of tines 3 and the paths of the protection elements 14A and 14B of Figure 3 are employed in a downwardly directed group of tines as shown in Figure 2, then the element 14B prevents the loss of the tine 9.

Figure 6 shows an embodiment which is applicable when there is a high risk of breaking of one of the tines 8 or 9, or both, in any location between the free end and the windings contiguous to the tines. In that case, the ends of protection elements 20A and 20B are clamped by means of the respective points of attachment 21 and 22 near the two free ends of the tines 8 and 9, respectively, in such a manner that, taken in the direction of operative travel of the tine group 3, they are situated behind the tines. From these points of attachment, the elements 20A and 20B, respectively, are passed along the rear sides of the respective tines 8 and 9 to the respective points of attachment 23 and 24, which are situated near the windings 10 and 11, respectively, the elements 20A and 20B having been tightened between the two points of attachments 21, 23 and 22, 24, respectively. Thereafter the elements 20A and 20B are threaded through the groups of windings 10 and 11, respectively, and by means of their other ends are fastened to the carrier member 1 in the region of a point of attachment 16.

In this embodiment, measures have been taken to prevent short, broken-off tine fragments from dropping into the crop, whilst at the same time a protection is provided against breaking of a group of tines or against detaching of an entire group of tines. The embodiment shown in Figure 6 can also be employed with downwardly directed tines (cf. Figure 2), because in this case both tines have the same risk of breaking.

The above-shown tine loss protection elements are not only suitable for use with groups of tines comprising two tines, but also for use in machines wherein one single tine is attached to a carrier. However, it is also possible to use these protection members for groups of tines consisting of more than two tines, as is shown in Figure 7 for a group comprising three tines.

In that case, the tine carrier 6 carrying the tine group 3 near its bottom side is extended upwardly for the connection of a third tine 25 which is fastened via flexible windings 26 to the tine carrier 6 by means of a connecting bolt 27, the arrangement being such that the tines 8, 9 and 25 are located approximately in a straight line one above the other.

When, as in the embodiment shown, the lowermost tine 8 has the greatest risk of breaking, a protection element 28 is clamped near the free end of the tine 8 and also, relative to the direction of rotation therebehind by means of a sleeve 19, is tightened along the tine 8, is passed to a point of attachment 29 (which is also effected by means of a sleeve 19) provided near the windings 10, and thereafter is threaded upwardly and then downwardly through the groups of windings 10, 11 and 26 to a point of attachment 30 arranged on the carrier member 1. Since the risk of fracturing of the tines 9 and 25 is relatively small as compared with that of the tine 8, this achieves that a broken-off piece of the tine 8 is not lost, the picking-up of crop is not interfered with, a fracture of the connecting member 12 cannot result in the loss of entire tines and windings, whilst also no tine loss can occur when the bolt 27 gets loose. The protection element or the protection elements 14 need not of necessity be of a flexible or resilient design, but they may alternatively be made of thin spring steel wire or, provided it does not render the assembly more difficult, they may even be of rigid material.

The use of the protection element or the protection elements 14 according to the inventive idea is not limited to the tines or groups of tines of haymaking machines for tedding or for swathing, but they may alternatively be used for other types of agricultural machines or parts thereof, such as for the tines of pick-up members of loaders and balers, and also for the tines of e.g. weeders and springtine harrows, i.e. in general for machines which may loose components.

## Claims

1. An agricultural machine comprising at least one cultivating member having a carrier member (1) provided with tines (8, 9) whether or not arranged in groups, which tines, each together with a plurality of windings (10, 11), are made from an integral piece of spring steel wire and are clamped against one side of the carrier member by means of a connection element (7) arranged beside said windings, while a tine loss protection element (14) connects the tine to the carrier member, characterized in that the protection element (14) is threaded through the plurality of windings (10, 11) associated with the tines (8, 9).

2. An agricultural machine as claimed in claim 1 and provided with tines arranged in groups (3), characterized in that from its point of attachment to a tine (8, 9) the protection element (14; 14A, 14B; 28) is threaded through all the pluralities of windings (10, 11) of the group (3) of tines.

3. An agricultural machine as claimed in claim 2, characterized in that from its point of attachment (19) to a tine (9) the protection element (14B) is threaded to a point of attachment (19) to a further tine (8).

4. An agricultural machine as claimed in claim 1 and provided with tines arranged in groups (3), characterized in that from its point of attachment (23, 24) to a tine the protection element (14; 20A, 20B) is threaded through the associated plurality of windings (10, 11) only.

5. An agricultural machine as claimed in any one of the preceding claims, characterized in that from its point of attachment (19) to a tine (9) the protection element (14B) is connected to the carrier member (1) via a point of attachment (18) to a further tine (8).

6. An agricultural machine as claimed in any one of the preceding claims, characterized in that the protection element (20A, 20B; 28) is attached to the tine (8, 9) near the free end thereof, from this point of attachment (19, 21, 22) is passed along the outside of the tine, and near the associated plurality of windings (10, 11) is also attached to this tine.

7. An agricultural machine as claimed in claim 6, characterized in that the protection element (20A, 20B; 28) is located at that side of the tine (8, 9) that faces away from the direction of·travel of the tine relative to the soil, during operation.

8. An agricultural machine as claimed in any one of claims 1 to 7, characterized in that the attachment (19, 21 to 24, 29) of the protection element (14A, 14B; 20A, 20B; 28) to a tine comprises a sleeve (19) which encloses the tine and the protection element with a tight fit, and that the material of the sleeve is hardened by deformation thereof.

9. An agricultural machine as claimed in any one of the preceding claims, characterized in that the tine (8, 9) is attached to a tine carrier (6), which tine carrier is connected pivotably to the carrier member (1) by means of a pivot pin (2), and that the protection element is attached to or near the pivot pin.

10. An agricultural machine as claimed in any one of the preceding claims, characterized in that the flexible protection element (14; 14A, 14B; 20A, 20B; 28) is threaded through the winding (10, 11; 26) in a tight pull.

FIG.1

FIG.2

FIG.3

FIG.4

FIG.5

FIG.6

FIG.7

EP 0 336 513 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | DE-U-7502394 (FELLA-WERKE)<br>* page 3 * | 1, 2 | A01D80/00 |
| X | DE-U-7606361 (GUMMI-JAEGER)<br>* page 3, line 15 - page 4, line 5 * | 1-4 | |
| A | | 8-10 | |
| A | DE-U-7412091 (FELLA-WERKE)<br>* the whole document * | 3, 5, 8 | |
| A | DE-A-2442355 (GUMMI-JAEGER)<br>* the whole document * | 4, 6 | |
| A,D | NL-A-6705524 (ZWEEGERS)<br>* the whole document * | 1, 3 | |
| A | NL-A-7603165 (ZWEEGERS)<br>* the whole document * | 6 | |
| A | DE-U-7412090 (FELLA-WERKE) | | |
| A | DE-U-7617919 (STOLL) | | **TECHNICAL FIELDS SEARCHED (Int. Cl.4 )** |
| A | US-A-2514560 (SCRANTON) | | A01D |
| A | NL-C-91162 (BAMFORDS) | | |
| A | DE-A-2507534 (KALMBACH) | | |

The present search report has been drawn up for all claims

| Place of search | Date of completion of the search | Examiner |
|---|---|---|
| THE HAGUE | 12 JUNE 1989 | DE LAMEILLIEURE D. |